## Europäisches Patentamt

## European Patent Office

## Office européen des brevets

(11) Numéro de publication: **0 004 498**
**B1**

(12) **FASCICULE DE BREVET EUROPEEN**

(45) Date de publication du fascicule de brevet:
**28.01.81**

(21) Numéro de dépôt: **79400160.2**

(22) Date de dépôt: **12.03.79**

(51) Int. Cl.³: **H 04 N 9/535,** H 04 N 5/16

(54) **Dispositif générateur de la tension de blocage d'un tube à rayons cathodiques et appareil récepteur de télévision en couleur comportant un tel dispositif.**

(30) Priorité: **16.03.78 FR 7807703**
**05.06.78 FR 7816770**

(43) Date de publication de la demande:
**03.10.79 Bulletin 79/20**

(45) Mention de la délivrance du brevet:
**28.01.81 Bulletin 81/4**

(84) Etats contractants désignés:
**BE CH DE GB IT LU NL SE**

(56) Documents cités:
**DE-A-2 702 817**
**FR-A-2 310 046**

(73) Titulaire: **VIDEOCOLOR Société Anonyme,**
**Périsud 7, boulevard Romain Rolland, F-92128 Montrouge (FR)**

(72) Inventeur: **Lavigne, André, 48, rue de l'Avenir,**
**F-93130 Noisy-Le-Sec (FR)**

(74) Mandataire: **Lerner, François, 5, rue Jules Lefebvre,**
**F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG.

## Dispositif générateur de la tension de blocage d'un tube à rayons cathodiques et appareil récepteur de télévision en couleur comportant un tel dispositif

L'invention est relative à un dispositif générateur de la tension de blocage d'un tube à rayons cathodiques notamment pour la télévision ou la visualisation en couleurs.

On sait qu'un appareil récepteur de télévision comprend un tube à rayons cathodiques dans lequel est (sont) disposé(s) un (ou plusieurs) canon(s) à électrons projetant des électrons sur un écran composé de phosphores excitables par les électrons et sur lequel sont ainsi formées des images lorsque le (ou les) faisceau(x) d'électrons projeté(s) «balaie(nt)» l'écran. Ce balayage est effectué selon des lignes sensiblement parallèles sur l'écran. L'intensité lumineuse en chaque point balayé de l'écran dépend de l'intensité du faisceau d'électrons; de façon plus précise, si l'intensité du faisceau électronique est nulle l'image est noire, et si cette intensité dépasse une valeur déterminée l'image est blanche (pour la télévision noir et blanc).

L'intensité du faisceau électronique engendré par le canon d'un tube de télévision dépend des potentiels ou tensions des diverses électrodes du canon. Pour faire varier l'intensité du faisceau électronique, et donc l'intensité de la lumière en chaque point balayé, on ne fait en général varier que le potentiel d'une seule électrode du canon, le plus souvent celui de la cathode, les potentiels des autres électrodes restant alors constants. Le potentiel appliqué sur cette électrode présente une partie de valeur constante à laquelle est superposée une composante d'amplitude variable en fonction de l'intensité de l'image à reproduire.

Le potentiel variable est appelé le signal de tension vidéo. La partie de valeur constante est appelée «tension de blocage» dans la présente description et permet de produire une image noire à la limite du gris, quand le signal vidéo est nul. On précise ici que cette partie de valeur constante est une composante continue qui ne doit pas être confondue avec la valeur moyenne du signal vidéo qui est également souvent dénommée «composante continue».

La tension de blocage doit être égale à la tension d'extinction du tube; cette dernière tension a une valeur bien précise, qui est celle qui est juste nécessaire pour que l'image soit noire; si la tension de blocage n'a pas cette valeur, l'image est trop claire ou trop sombre. Par exemple, si le signal vidéo est appliqué sur la cathode et si la tension de blocage a une valeur positive élevée l'image sera constamment noire.

On sait que la valeur de la tension d'extinction peut se modifier pour diverses raisons, en particulier le vieillissement du tube de télévision. De plus, les moyens générateurs de la tension de blocage peuvent présenter des dérives. Si cette tension de blocage n'est pas modifiée en fonction de la variation de la tension d'extinction et en fonction desdites dérives, l'image est perturbée, celle-ci étant alors, comme déjà mentionné, trop lumineuse ou trop sombre, et dans le cas d'un appareil récepteur de télévision en couleurs, ces dernières peuvent en être affectées. C'est pourquoi on prévoit généralement sur les appareils récepteurs de télévision des moyens permettant de faire varier la tension de blocage.

Dans les appareils récepteurs de télévision noir et blanc, cette correction est celle dite de «luminosité» et elle est effectuée de façon manuelle, par exemple en faisant tourner le bouton de commande d'un potentiomètre.

Les appareils récepteurs de télévision en couleurs comportent trois canons à électrons et, dans ce cas, il faut engendrer trois tensions de blocage. Ces tensions de blocage peuvent toutes se modifier d'une même quantité; dans ce cas, on a affaire à une variation «en mode commun» et la correction de cette variation peut alors être effectuée de façon manuelle, comme dans les téléviseurs noir et blanc, à l'aide d'un bouton de commande de «luminosité». Cependant, ces variations peuvent être également de type différentiel, c'est-à-dire ne pas être de valeurs égales pour les trois canons. Une telle variation différentielle ne peut, en pratique, pas être corrigée de façon manuelle.

La solution connue classiquement utilisée sur la grande majorité des tubes actuels pour imposer la valeur correcte à la tension de blocage consiste à stabiliser les potentiels appliqués sur toutes les électrodes du (ou des) canon(s) à électrons. Mais on a constaté que cette solution n'est pas satisfaisante après un usage prolongé du tube.

On connaît en outre un dispositif générateur de la tension de blocage d'un tube de télévision en couleurs qui permet d'obtenir automatiquement, à chaque instant, la valeur correcte de cette tension de blocage pour chaque canon à électrons. Dans ce dispositif connu, des moyens sont prévus pour, d'une part, mesurer l'intensité du courant cathodique (c'est-à-dire l'intensité du faisceau d'électrons) pendant des balayages de lignes au cours desquels on impose la valeur zéro au signal vidéo et, d'autre part, utiliser le résultat de cette mesure afin d'imposer à la tension de blocage appliquée sur des grilles dites «$G_1$» du tube la valeur-seuil pour laquelle l'intensité du courant cathodique est nulle lorsque le signal vidéo est nul. Un tel système est décrit dans la revue «IEEE Transactions on Consumer Electronics» de février 1977 pages 8 à 12. Or, dans la plupart des appareils récepteurs de télévision, notamment en couleurs, le signal vidéo est appliqué sur les cathodes de trois canons à électrons. L'utilisation d'un tel dispositif oblige donc à prévoir des modifications importantes des appareils récepteurs de télévision; en particulier, il est nécessaire de prévoir une alimentation d'une polarité inhabituelle et toutes les cathodes des canons à électrons d'un récepteur équipé de ce dispositif sont portées à un même potentiel; de ce fait, la pente des canons est faible.

On connaît enfin un autre système de compensation automatique du courant de cut-off applicable notamment aux tubes cathodiques pour lesquels la modulation vidéo est appliquée sur les cathodes. Un tel système est décrit notamment à la demande de brevet allemand 2 702 817 au nom de Bang et Olufsen.

Le fonctionnement de ce dispositif peut se résumer ainsi: à chaque retour trame, la correction de cut-off se décompose toujours en une phase de préparation et une phase de mesure et de réglage. La phase de préparation permet d'isoler la modulation ou, si l'on préfère, de la «déconnecter». Cette phase est nécessaire dans un tel système pour supprimer la composante de modulation et laisser les circuits se stabiliser dans cet état. Par conséquent, à la fin de cette phase de préparation, seule la source de tension de cut-off est connectée à la cathode. Un circuit d'intégration permet de «mémoriser» la valeur de cette source de tension de cut-off à la fin de la phase de préparation, jusqu'à la mesure suivante. Puis, pendant la phase de mesure et de réglage, on se sert de cette tension mémorisée pour modifier en conséquence la polarisation de l'amplificateur vidéo, de façon à toujours être ramené au point de cut-off pendant la période de balayage normale suivante où la modulation vidéo est de nouveau connectée à la cathode. Ainsi, l'idée de base développée dans ce système antérieur consiste à définir une procédure de test qui implique un traitement particulier des signaux transmis aux cathodes pendant les retours trame. Par conséquent, l'inconvénient est que l'on est obligé de générer deux impulsions pendant l'intervalle de retour trame, une impulsion de préparation dont le rôle est de «déconnecter» la vidéo et une impulsion initialisant le test proprement dit.

La présente invention a pour but de remédier aux inconvénients mentionnés ci-dessus, et notamment de fournir un dispositif générateur de tension de blocage pour récepteur de télévision, en particulier en couleurs, qui soit propre à engendrer automatiquement sans réglage manuel, cette tension de blocage, et qui soit aisément adaptable, à peu de frais, à la plupart des appareils récepteurs de télévision actuellement fabriqués.

Le dispositif générateur de la tension de blocage d'un tube à rayons cathodiques, notamment pour la visualisation; telle que la télévision en couleurs, comportant des moyens sensibles à l'intensité du courant cathodique pendant des temps d'échantillonnage au cours desquels le signal vidéo est nul et des moyens régulateurs pour modifier la tension de blocage en fonction de cette intensité, de façon à annuler celle-ci quand le signal vidéo est nul, selon l'invention est caractérisé en ce que les signaux de tension vidéo et de blocage étant appliqués sur la cathode du (ou des) canon(s) à électron du tube par l'intermédiaire d'un amplificateur de tension vidéo, ledit dispositif comporte une boucle de contre-réaction insérée entre la connection reliant la sortie dudit amplificateur de tension vidéo à la cathode correspondante et une entrée de régulation dudit amplificateur de tension vidéo, pour l'asservissement de la tension de blocage et que cette boucle de contre-réaction comprend un amplificateur de courant pour amplifier le courant cathodique et présentant une impédence de sortie de valeur élevée par rapport à l'impédance de sortie de l'amplificateur de tension vidéo, le circuit d'entrée dudit amplificateur de courant étant relié à ladite connection; des moyens de mise en mémoire dont l'entrée est connectée à la sortie dudit amplificateur de courant et dont la sortie est reliée à ladite entrée de régulation.

L'amplificateur vidéo est agencé de façon telle que sur sa sortie apparaisse, se superposant au signal vidéo amplifié, une tension continue dont la valeur est fonction de la valeur du signal appliqué sur son entrée de régulation. En d'autres termes, lorsqu'un signal de valeur donnée est appliquée sur l'entrée de régulation il apparaît sur la sortie de l'amplificateur vidéo une tension continue (superposée au signal vidéo amplifié) de valeur déterminée. Si le signal appliqué sur l'entrée de régulation correspond à une intensité du courant cathodique qui n'est pas nulle, la tension continue correspondante sur la sortie de l'amplificateur vidéo augmente de valeur; or, une augmentation de tension sur la cathode entraîne une diminution de l'intensité du courant cathodique; ce qui est le but de régulation recherché.

Dans le mode de réalisation préféré de l'invention, le dispositif comporte un amplificateur du courant cathodique présentant une impédance de sortie de valeur élevée par rapport à l'impédance de sortie de l'amplificateur vidéo. La sortie de cet amplificateur de courant est reliée à l'entrée des moyens de mise en mémoire. L'ensemble est monté de façon telle que, d'une part, le courant cathodique pénétrant dans l'amplificateur de courant rejoigne la masse par l'intermédiaire de l'étage d'entrée de l'amplificateur de courant et de la sortie à basse impédance de l'amplificateur vidéo et, d'autre part, le courant amplifié sortant de la borne d'impédance élevée de l'amplificateur de courant revienne à cet amplificateur en passant par la sortie à basse impédance de l'amplificateur vidéo.

Comme on le verra plus loin, avec un tel montage, qui est particulièrement simple, les variations du signal de tension vidéo proprement dit (c'est-à-dire ne comportant pas la composante continue de tension de blocage) et celles de l'intensité du courant cathodique pendant les temps d'échantillonnage, n'ont pas d'influence l'une sur l'autre.

De préférence, dans ce dernier mode de réalisation, pour mettre en mémoire le courant cathodique seulement pendant les temps d'échantillonnage, on prévoit des moyens interrupteurs pour court-circuiter l'entrée de l'amplificateur de courant en dehors de ces temps d'échantillonnage. Si ces temps d'échantillonnage sont les retours de balayages, pour commander le fonctionnement des moyens interrupteurs, avantageusement on utilise des impulsions de tension engendrées pendant les balayages normaux et, pour que ces impulsions ne perturbent pas le signal de tension vidéo, on les transforme en impulsions de courant à l'aide d'un convertisseur présentant une impédance de sortie de valeur élevée par rapport à l'impédance de sortie de l'amplificateur vidéo, et on fait revenir ces impulsions de courant de commande à la masse par l'intermédiaire de la sortie à basse impédance de l'amplificateur vidéo.

Dans le cas d'un récepteur de télévision (ou de façon générale d'un dispositif de visualisation) en couleurs qui comporte trois canons à électrons on prévoit un dispositif conforme à l'invention, quel que soit son mode de réalisation, pour chaque canon à électrons.

Selon une variante, les moyens interrupteurs peuvent être montés pour court-circuiter l'entrée des moyens de mise en mémoire en dehors du temps d'échantillonnage.

Etant donné que ces moyens interrupteurs sont ainsi isolés de la cathode, les impulsions de tension utilisées pour leur commande ne risquent pas de perturber le signal vidéo; le circuit de commande de ces moyens interrupteurs peut donc être particulièrement simple.

D'autres buts, dispositions et avantages de l'invention apparaîtront avec la description de certains de ses modes de réalisation, cette description étant faite en se référant au dessin annexé, sur lequel:

La fig. 1 montre, sous forme de blocs, un dispositif conforme à l'invention;

La fig. 2 représente une réalisation particulière du dispositif montré sur la fig. 1;

La fig. 3 montre, sous forme de blocs, une variante d'un dispositif conforme à l'invention; et

La fig. 4 représente une réalisation particulière du dispositif montré sur la fig. 3.

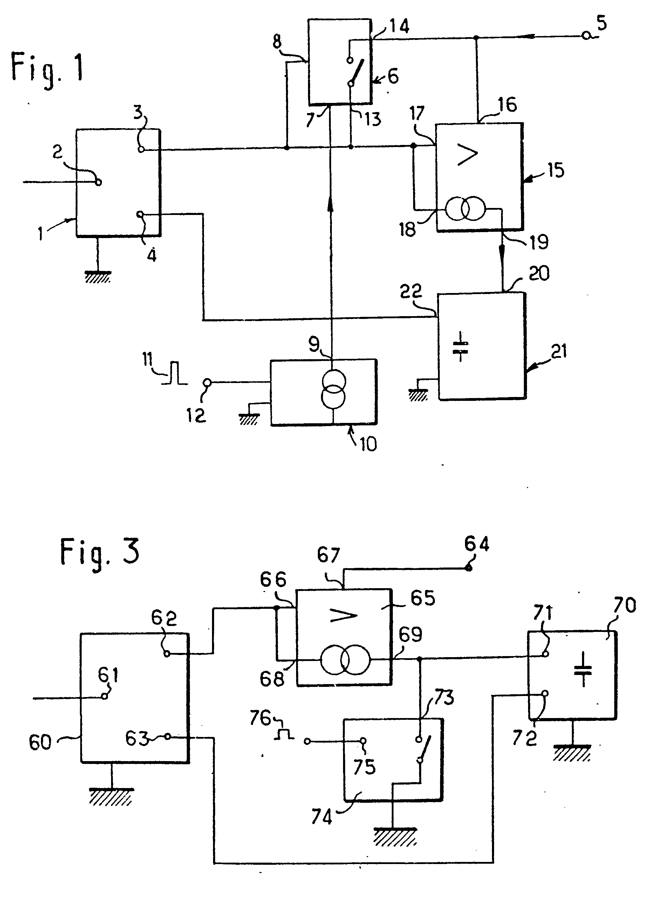

Le dispositif représenté sur la fig. 1 comprend un amplificateur vidéo 1, connu en lui-même, présentant une borne d'entrée 2 pour le signal de tension vidéo et une sortie 3 pour ce même signal. Cet amplificateur 1 présente également une entrée 4 de régulation ou contre-réaction qui, dans les dispositifs antérieurement connus, est raccordée à une source de signal constant pour imposer à la tension continue superposée au signal vidéo sortant de la borne 3 de l'amplificateur 1 une valeur égale à la tension d'extinction du canon à électrons correspondant (non montré). De plus, dans l'exemple, la tension continue sortant de la borne 3 varie dans le même sens que le signal continu appliqué sur l'entrée 4. Mais, comme on le verra ci-après, dans le dispositif selon l'invention, l'entrée de contre-réaction 4 (que l'on appellera quelquefois entrée de commande) n'est pas reliée à la sortie d'une source de signal de valeur constante, mais à la sortie d'un circuit délivrant un signal représentatif du courant cathodique pendant les retours de balayages.

La sortie 3 est reliée à la cathode 5 du canon correspondant par l'intermédiaire d'un organe interrupteur 6.

L'organe 6 est constitué par un quadripôle à deux bornes d'entrées 7 et 8. L'entrée 8 est reliée à la sortie 3 de l'amplificateur 1. L'entrée 7 de ce quadripôle est connectée à la sortie 9 d'un autre quadripôle 10 qui a pour fonction de transformer des impulsions 11 de tension présentées sur ses entrées en des impulsions de courant. Ce dernier quadripôle 10 comporte une première borne d'entrée 12 et sa seconde borne d'entrée est constituée par la masse; la seconde borne de sortie de ce quadripôle est également connectée à la masse.

Les impulsions 11 sont engendrées par un générateur (non montré) faisant partie de l'équipement classique du récepteur de télévision. Les impulsions 11 sont en synchronisme avec les balayages d'aller ou de retour de ligne.

L'impédance de sortie du quadripôle 10, c'est-à-dire l'impédance de la borne 9, présente une valeur élevée de façon que ce quadripôle se comporte comme un générateur de courant.

Le quadripôle 6 présente deux bornes de sorties 13 et 14 reliées respectivement à la sortie 3 de l'amplificateur 1 et à la cathode 5.

Le dispositif représenté sur la fig. 1 comporte également un amplificateur de courant 15 destiné à amplifier le courant cathodique. Cet amplificateur 15 est constitué par un quadripôle à deux bornes d'entrées 16 et 17. L'entrée 16 est reliée directement à la cathode 5 et l'entrée 17 est connectée à la sortie 3 de l'amplificateur 1. Les bornes de sorties 18 et 19 de ce quadripôle 15 sont reliées, respectivement, à la borne 3 et à l'entrée 20 d'un circuit 21. Ce circuit 21 a la fonction suivante: il convertit le courant appliqué sur son entrée 20 en une tension, il met en mémoire cette tension et convertit en courant cette dernière ainsi mise en mémoire. Il apparaît donc sur la sortie 22 du circuit 21 un signal de courant.

Ce circuit 21 constitue également un quadripôle dont les bornes d'entrées sont constituées par la borne 20 et la masse. L'une des bornes de sortie 22 est reliée à l'entrée de régulation 4 de l'amplificateur vidéo 1. La seconde borne de sortie du quadripôle 21 est également reliée à la masse.

L'amplificateur de courant 15 présente entre ses bornes de sorties 18 et 19 une impédance élevée de façon à constituer, entre ces bornes, un générateur de courant.

Le fonctionnement de ce dispositif est le suivant:

Pendant les balayages directs de lignes, l'interrupteur 6 est fermé et les bornes d'entrées 16 et 17 de l'amplificateur 15 sont ainsi court-circuitées; aucun courant n'est alors débité par l'amplificateur 15 de la borne 19 vers l'entrée 20 du circuit 21.

La commande du fonctionnement de l'organe 6 est assurée par le convertisseur tension-courant 10.

Les impulsions de courant délivrées sur la sortie 9, à haute impédance, du dispositif 10 suivent le chemin suivant: borne 7 – organe 6 – sortie 8 – borne 3 (à base impédance) – masse. Etant donné que l'amplificateur 1 présente, à sa sortie 3, une basse impédance, ce courant ne perturbe pas la tension de cette borne 3. Réciproquement, le courant délivré sur la sortie 9 n'est pas modifié par les variations de tension sur la borne 3.

Pendant les balayages de retour de lignes et de trames, l'organe interrupteur 6 est ouvert et le courant cathodique pénètre dans l'amplificateur 15 par l'intermédiaire des bornes 16 et 17. La borne de sortie 19 délivre alors un signal de courant représentant de façson amplifiée, le courant cathodique.

Le courant cathodique suit le parcours suivant: cathode 5, entrée 16, étage d'entrée de l'amplicateur 15, borne 17, borne 3 de l'amplificateur 1, masse.

Le parcours du courant de sortie de l'amplificateur 15 est le suivant: borne 19, borne 20, circuit 21, masse, borne 3 de l'amplificateur 1 et borne 18 de l'amplificateur 15.

Ce courant de sortie de l'amplificateur 15 passe, comme le courant engendré par le circuit 10, par la borne 3 mais ne perturbe pas le signal de tension délivré sur cette borne car, entre les bornes 18 et 19, l'amplificateur 15 présente une impédance élevée et l'amplificateur 1 présente une basse impédance du côté de sa borne 3. Pour la même raison, les variations de tension du signal vidéo ne perturbent pas le courant sortant de l'amplificateur 15.

Ce signal de courant sortant de la borne 19 de l'amplificateur 15 doit être aussi faible que possible afin de réaliser l'extinction du tube pendant les retours de balayages.

Il est converti en tension par le circuit 21 et stocké par ce dernier pour, enfin, après avoir été de nouveau converti en courant, être appliqué sur l'entrée de régulation 4 afin de conférer la valeur désirée à la composante continue de tension délivrée sur la sortie 3 par l'amplificateur vidéo 1.

En effet, lorsque le courant appliqué sur l'entrée 4 est d'intensité nulle, il apparaît sur la sortie 3 une tension continue de valeur $V_{ext.}$ constante s'ajoutant au signal de tension vidéo. Si l'intensité du courant cathodique n'est pas nulle pendant les retours de balayages, l'intensité du courant appliqué sur l'entrée 4 n'est pas nulle non plus et il en résulte que la tension continue sortant de la borne 3 a une valeur supérieure à $V_{ext.}$. S'agissant d'un potentiel appliqué sur une cathode, son augmentation entraîne la diminution de l'intensité du courant cathodique. On obtient donc bien l'effet de régulation recherché, c'est-à-dire que toute augmentation de l'intensité du courant cathodique lors des retours de balayages est compensée par une variation de la tension continue qui se superpose au signal de tension vidéo pour ramener la valeur de cette tension continue à celle de la tension d'extinction.

On appréciera qu'avec un tel dispositif on assure toujours la valeur convenable à la tension de blocage sans modifier de façon importante les appareils récepteurs de télévision.

On notera qu'il n'est pas indispensable que le signal appliqué sur l'entrée 4 varie dans le même sens que la tension continue délivrée sur la sortie 3 de l'amplificateur 1. Il suffit qu'une variation de ce signal qui corresponde à une augmentation de l'intensité du courant cathodique provoque l'augmentation de cette tension continue sur la sortie 3 de façon à diminuer ladite intensité du courant cathodique.

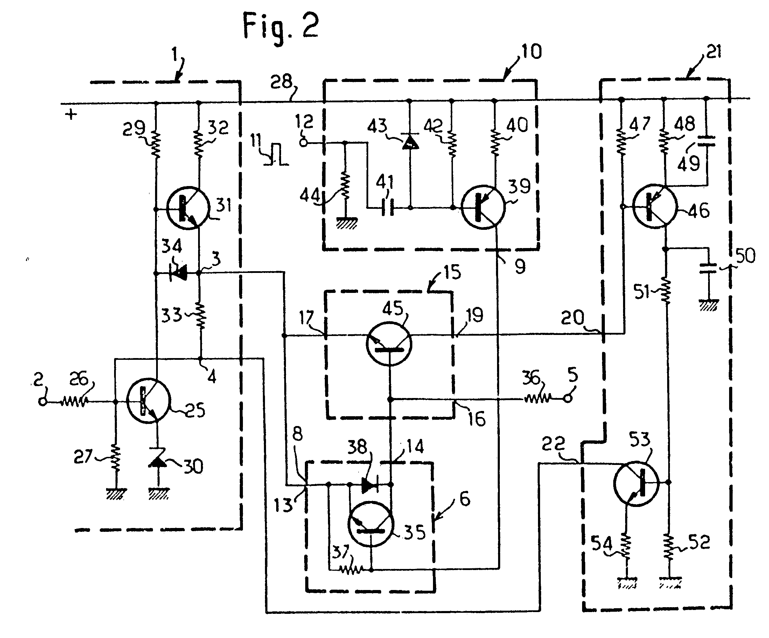

Sur le schéma de la fig. 2, les éléments de même nature, c'est-à-dire remplissant la même fonction, que ceux de la fig. 1, ont été repérés par les mêmes chiffres de références.

Dans cet exemple, l'amplificateur 1, connu en lui-même, est du type à «charge active». On sait qu'un tel amplificateur présente une faible impédance de sortie tout en consommant peu de courant.

Cet amplificateur 1 comprend un transistor 25 de type NPN dont la base est reliée à la borne d'entrée 2 par l'intermédiaire d'une résistance 26. La base de ce transistor 25 est également reliée à la masse par l'intermédiaire d'une résistance 27 ainsi qu'à la borne 4 de régulation. Le collecteur du transistor 25 est relié à une ligne 28 portée à un potentiel positif (+) de valeur élevée par l'intermédiaire d'une résistance 29 dont la valeur est élevée. L'émetteur du transistor 25 est relié à la masse par l'intermédiaire d'une diode Zéner 30 dans un sens tel que c'est l'anode de cette diode 30 qui est à la masse.

Le transistor 25 est monté en amplificateur à émetteur commun; un tel montage présente une impédance de sortie de valeur élevée. C'est pour diminuer cette impédance que l'amplificateur est complété par un montage en «émetteur-follower» qui comprend un transistor 31 également de type NPN. La base de ce transistor 31 est reliée au collecteur du transistor 25 tandis que son émetteur est connecté à la borne 3 et son collecteur à la ligne 28 par l'intermédiaire d'une résistance 32.

Enfin, pour l'amplificateur 1, une résistance 33 de contre-réaction est disposée entre les bornes 3 et 4 et une diode 34 assure une liaison entre la borne 3 et le collecteur et la base des transistors, respectivement 25 et 31. Le sens de branchement de cette diode 34 est tel que son anode est reliée à la borne 3.

L'organe interrupteur 6 comporte un transistor 35 de type NPN dont l'émetteur est relié directement à la borne 3 et constitue donc la sortie 13 et l'entrée 8. Le collecteur de ce transistor 35 est relié à la cathode 5 par l'intermédiaire d'une résistance 36. Une résistance 37 est disposée entre la base et l'émetteur de ce transistor. Enfin, une diode 38 est branchée en parallèle sur l'espace émetteur-collecteur du transistor 35 de façon que son anode soit reliée directement à l'émetteur dudit transistor.

Le convertisseur 10 d'impulsions de tension en impulsions de courant comporte un transistor 39 du type PNP dont le collecteur est relié à la base du transistor 35 et dont l'émetteur est relié à la ligne 28 par l'intermédiaire d'une résistance 40.

La base du transistor 39 est reliée à la borne 12 sur laquelle sont appliquées des impulsions 11, qui bloquent le transistor pendant les retours de balayages, par l'intermédiaire d'un condensateur 41. Cette base du transistor 39 est également reliée à la ligne 28 par l'intermédiaire du montage en parallèle d'une résistance 42 et d'une diode 43 dont la cathode est reliée directement à la ligne 28.

Enfin, une résistance 44 est disposée entre la borne 12 et la masse.

L'amplificateur 15 est constitué par un transistor 45 de type NPN. La base de ce transistor 45 est reliée à la cathode 5 par l'intermédiaire de la résistance 36 et est donc connectée directement au collecteur du transistor 35. L'émetteur de ce transistor 45 est relié à la sortie 3 de l'amplificateur 1.

Le circuit 21 comporte un transistor 46 de type PNP dont la base est reliée à la borne 20, c'est-à-dire au collecteur du transistor 45. Cette base du transistor 46 est également connectée à la ligne 28 par l'intermédiaire d'une résistance 47. Entre l'émetteur du transistor 46 et la ligne 28 sont branchés en parallèle une résistance 48 et un condensateur 49. Le collecteur du transistor 46 est relié à la masse par l'intermédiaire d'un autre condensateur 50 et par l'intermédiaire de deux résistances 51 et 52 en série.

La borne commune aux résistances 51 et 52 est connectée à la base d'un transistor 53 de type PNP dont l'émetteur est relié à la masse par l'intermédiaire d'une résistance 54 et dont le collecteur est relié à l'entrée de régulation 4 de l'amplificateur vidéo 1 et constitue donc la borne de sortie 22 du circuit 21.

Le fonctionnement du dispositif représenté sur la fig. 2 est le même que celui du dispositif montré sur la fig. 1. Il convient cependant de préciser les points suivants:

La diode 34, entre la borne 3 et le collecteur du transistor 25, permet d'assurer la décharge du condensateur formé par le tube pendant les impulsions transitoires de polarité négative.

Les ensembles à condensateur et résistance de références 49 et 48, d'une part, et 50 et 51, d'autre part, permettent de transformer en tension, de stocker et d'intégrer le signal de courant apparaissant sur la sortie 19 de l'amplificateur 15.

Le montage à transistor 53 et résistances 52 et 54 permet de reconvertir en courant le signal de tension emmagasiné dans lesdits ensembles à condensateurs 49 et 50.

Lorsque l'intensité du courant cathodique n'est pas nulle, la résistance de l'espace collecteur-émetteur du transistor 53 diminue, ce qui provoque une augmentation du courant sortant de la borne 4 de l'amplificateur 1 vers la borne 22 du circuit 21, le potentiel de cette borne étant imposé par celui de la diode zéner 30 et par la tension $V_{BE}$ (base-émetteur) du transistor 25. Cette augmentation d'intensité de courant est alors compensée par un appel de courant qui passe par la résistance 33. Dans ces conditions, le potentiel de la borne 3 augmente, ce qui est le but de la régulation.

Les impulsions 11, après avoir été converties en impulsions de courant permettent de bloquer le transistor 39 pendant les retours de balayages (lignes et trames). Le transistor 39 étant bloqué, la base du transistor 35 du circuit interrupteur 6 est alors «en l'air» et ce dernier transistor est lui-même bloqué. Par contre, au cours du balayage normal, le transistor 39 est saturé et il en est de même du transistor 35; ce dernier court-circuite alors l'espace émetteur-base du transistor 45.

La diode 38 et l'espace émetteur-collecteur du transistor 35 assurent la décharge des condensateurs du tube. La diode 38 réalise cette fonction notamment au cours de l'apparition des impulsions transitoires du signal vidéo.

La diode 43 et la résistance 42 du convertisseur 10 assurent un fonctionnement sûr de ce dernier. En effet, ces éléments permettent de bloquer en permanence le transistor 39 en l'absence permanente d'impulsions sur la borne 12. Si une telle absence d'impulsions sur la borne 12 provoquait la saturation permanente du transistor 39, les transistors 46 et 53 seraient bloquées, ce qui amènerait à diminuer la tension appliquée sur la cathode 5 et donc à augmenter l'intensité du courant cathodique. Les risques d'apparition d'une telle situation, qui serait dangereuse pour le tube, sont éliminés par le montage à diode 43 et résistance 42.

Bien que dans l'exemple la mesure de l'intensité du courant cathodique soit effectuée pendant les retours de balayages de lignes et de trames, cette condition n'est pas indispensable. En effet, il suffit, de façon générale, de mesurer cette intensité du courant cathodique pendant des instants d'échantillonnage (périodiques ou aléatoires) au cours desquels le signal vidéo est nul. Cette nullité du signal vidéo peut être imposée selon un programme prédéterminé, par exemple à l'aide d'un microprocesseur.

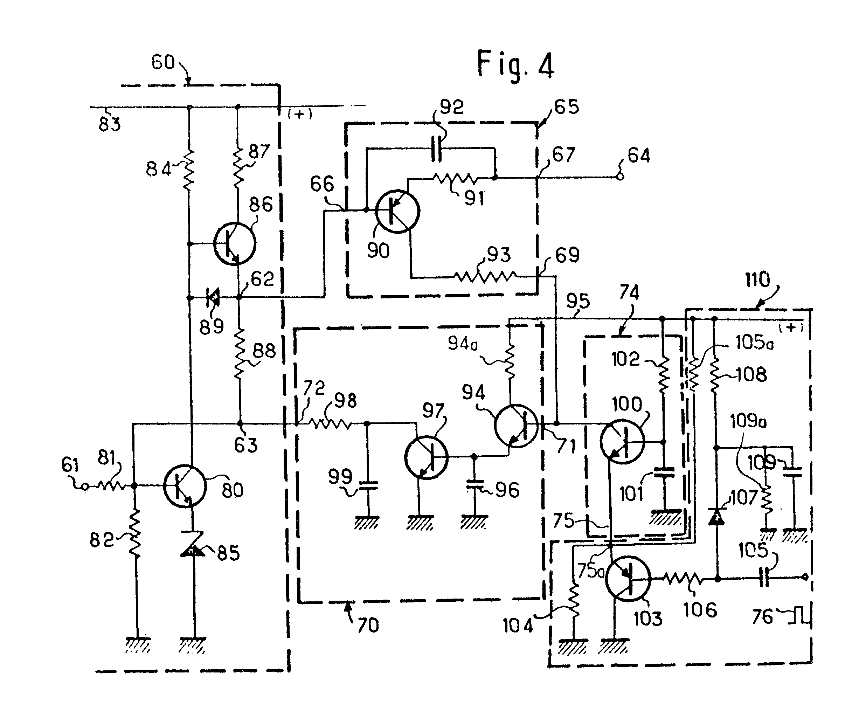

Le dispositif montré sur la fig. 3 comprend un amplificateur vidéo 60, connu en lui-même, présentant une borne d'entrée 61 pour le signal de tension vidéo et une sortie 62 pour ce même signal amplifié. Il comporte également une entrée 63 de régulation ou contre-réaction. Cet amplificateur 60 est tel que lorsqu'un signal de valeur constante est appliqué sur l'entrée 63, il apparaît sur la sortie 62 une tension continue de valeur déterminée – se superposant posant au signal vidéo amplifié – qui est fonction de la valeur du signal appliqué sur l'entrée 63. Comme on le verra ci-après, l'entrée de commande ou de contre-réaction 63 est reliée à la sortie d'un circuit délivrant un signal représentatif de l'intensité du courant cathodique pendant les retours de balayage.

La sortie 62 de l'amplificateur 60 est à basse impédance.

Elle est reliée à la cathode 64 du canon à électrons correspondant par l'intermédiaire de l'étage d'entrée d'un amplificateur de courant 65 présentant une impédance de sortie de valeur élevée entre ses bornes de sortie 68 et 69. En d'autres termes, l'amplificateur 65 est, vu de sa sortie, un générateur de courant.

Cet amplificateur de courant 65 est un quadripôle qui présente également deux bornes d'entrées 66 et 67 reliées respectivement à la borne de sortie de l'amplificateur 60 et à la cathode 64. Les bornes de sortie 68 et 69 sont connectées respectivement à la borne 66 et à une première borne d'entrée 71 d'un dispositif 70 de mise en mémoire. Le dispositif 70 est un quadripôle dont les bornes d'entrée sont, d'une part, la borne 71 et, d'autre part, la masse. Ce quadripôle présente une première borne de sortie 72 qui est reliée directement à l'entrée de commande 63 de l'amplificateur vidéo 60. La seconde borne de sortie du quadripôle 70 est la masse.

La borne 69 de l'amplificateur 65 est également connectée à une première borne de sortie 73 d'un moyen interrupteur 74. L'autre borne de sortie de ce moyen interrupteur est la masse. Cet interrupteur constitue également un quadripôle sur une borne d'entrée 75 duquel sont appliquées des impulsions de tension 76 engendrées par un générateur (non montré) comportant des moyens faisant partie de l'équipement classique d'un récepteur de télévision. Ces impulsions 76 sont en synchronisme avec les balayages d'aller ou de retour de lignes. La seconde borne d'entrée du quadripôle 74 est la masse.

Le fonctionnement du dispositif montré sur la fig. 3 est le suivant.

Quel que soit l'état de l'interrupteur 74, le signal de tension apparaissant sur la sortie 62 de l'amplificateur vidéo 60 est transmis à la cathode 64 par l'intermédiaire de l'étage d'entrée de l'amplificateur 65. Le courant cathodique suit le chemin suivant: cathode 64, entrée 67, étage d'entrée de l'amplificateur 65, entrée 66, borne 62 à basse impédance de l'amplificateur 60 et masse.

Pendant les balayages directs de lignes, l'interrupteur 74 est fermé et aucun signal n'est appliqué sur les entrées du dispositif de mémoire 70 étant donné que ses entrées sont ainsi en court-circuit.

Dans ce cas, le courant débité par l'amplificateur 65 a le parcours suivant: borne 69, interrupteur 74, masse, borne de sortie 62 de l'amplificateur 60, borne de sortie 68 de l'amplificateur 65.

Pendant les balayages de retours de lignes et de trames, l'interrupteur 74 est ouvert (position montrée sur la fig. 3).

La borne de sortie 69 de l'amplificateur 65 délivre un signal de courant qui représente de façon amplifiée le courant cathodique. Ce signal suit le parcours suivant: borne 69, borne 71, masse, borne 62 de l'amplificateur 60 et borne 68 de l'amplificateur 65.

Le dispositif de mémoire 70 n'est donc alimenté que lorsque le signal vidéo est nul. Par contre, sa sortie 72 applique un signal en permanence sur l'entrée de commande 63 de l'amplificateur vidéo.

Le signal de courant appliqué sur l'entrée 71 du dispositif est, dans ce dernier, transformé en tension, mis en mémoire, puis de nouveau converti en courant pour être appliqué sur l'entrée 63 de l'amplificateur 60.

Lorsque le courant appliqué sur l'entrée 63 est d'intensité nulle, il apparaît sur la sortie 62 une tension continue de valeur $V_{ext.}$ constante s'ajoutant au signal de tension vidéo. Si l'intensité du courant cathodique n'est pas nulle pendant les retours de balayage, l'intensité du courant appliqué sur l'entrée 63 n'est pas nulle non plus et il en résulte que la tension continue sortant de la borne 62 a une valeur supérieure à $V_{ext.}$. S'agissant d'un potentiel appliqué sur la cathode, son augmentation entraîne la diminution de l'intensité du courant cathodique. On obtient donc bien l'effet de régulation recherché, c'est-à-dire que toute augmentation de l'intensité du courant cathodique lors des retours de balayages est compensée par une variation de la tension continue qui se superpose au signal de tension vidéo pour ramener la valeur de cette tension continue à celle de la tension d'extinction.

Sur le schéma de la fig. 4, les éléments de même nature, c'est-à-dire remplissant la même fonction que ceux de la fig. 3, ont été repérés par les mêmes chiffres de référence.

L'amplificateur 60 est du type à charge active. Il comprend un transistor 80 de type NPN dont la base est reliée à la borne d'entrée 61 par l'intermédiaire d'une résistance 81 et à la masse par l'intermédiaire d'une résistance 82. La base du transistor 80 est connectée directement à la borne 63 de régulation. Le collecteur du transistor 80 est relié à une ligne 83 portée à un potentiel positif (+) – de 230 volts dans l'exemple – par l'intermédiaire d'une résistance 84 de valeur élevée. L'émetteur du transistor 80 est relié à la cathode d'une diode Zéner 85 dont l'anode est à la masse.

Le transistor 80 est monté en émetteur commun; un tel montage présente une impédance de sortie de valeur élevée. C'est pour diminuer cette impédance que l'amplificateur est complété par un montage en «émetteur-follower» qui comprend un transistor 86 également de type NPN dont la base est reliée au collecteur du transistor 80 tandis que son émetteur est connecté à la borne 62 et son collecteur à la ligne 83 par l'intermédiaire d'une résistance 87.

L'amplificateur 60 comprend enfin une résistance de contre-réaction 88 entre les bornes 62 et 63 ainsi qu'une diode 89 entre la borne 62 et le collecteur du transistor 80. L'anode de cette diode est reliée à la borne 62.

L'amplificateur 65 comprend un transistor 90 de type PNP dont la base est reliée directement à la borne 66 et l'émetteur à la cathode 64 par l'intermédiaire d'une résistance 91. La borne de la résistance 91 qui est reliée directement à la cathode 64 est également connectée à la base du transistor 90 par l'intermédiaire d'un condensateur 92. Le collecteur du transistor 90 est relié à la borne de sortie 69 par l'intermédiaire d'une résistance 93.

Le transistor 90 est monté en «base commune». Son gain en courant est pratiquement égal à 1. L'impédance émetteur-base est faible alors que l'impédance collecteur-base a une valeur élevée.

La résistance 91 et le condensateur 92 constituent un filtre passe-bas permettant de court-circuiter les transitoires de signe positif.

Le dispositif à mémoire 70 comporte un transistor 94 de type NPN dont la base est reliée directement à la borne 71 et le collecteur est connecté à une ligne 95 portée à un potentiel positif (+) de 24 volts par l'intermédiaire d'une résistance 94a. L'émetteur du transistor 94 est relié à la masse par l'intermédiaire d'un condensateur 96 ainsi qu'à la base d'un autre transistor 97 également de type NPN. L'émetteur du transistor 97 est à la masse tandis que son collecteur est relié à la borne de sortie 72 par l'intermédiaire d'une résistance 98. Un second condensateur 99 est prévu entre le collecteur du transistor 97 et la masse.

L'interrupteur 74 comporte un transistor 100 de type NPN dont le collecteur est relié à la borne 71 et dont la base est connectée, d'une part, à la masse par l'intermédiaire d'un condensateur 101 et, d'autre part, à la ligne 95 à travers une résistance 102.

L'émetteur du transistor 100 est relié à la borne 75.

L'entrée 75 de l'interrupteur 74 est reliée à la sortie 75a d'un dispositif 110 sur l'entrée duquel sont appliquées les impulsions 76 engendrées par un générateur faisant partie de l'équipement classique d'un récepteur de télévision. Dans le cas d'un appareil récepteur de télévision en couleurs, le dispositif 110 est commun aux trois dispositifs générateurs de tension de blocage.

La sortie 75a de ce dispositif 110 est reliée à la masse par l'intermédiaire de l'espace émetteur-collecteur d'un transistor 103 du type PNP dont l'émetteur est également relié à la masse à travers une résistance 104. Cet émetteur est connecté à la ligne 95 par l'intermédiaire d'une résistance 105a.

Les impulsions 76 sont appliquées sur la base du transistor 103 par l'intermédiaire d'un condensateur 105 et d'une résistance 106 en série. La borne commune au condensateur 105 et à la résistance 106 est reliée à l'anode d'une diode 107 dont la cathode est connectée à la ligne 95 par l'intermédiaire d'une résistance 108. Cette cathode de la diode 107 est également reliée à la masse par l'intermédiaire d'un condensateur 109. Une résistance 109a est en parallèle avec le condensateur 109.

Le fonctionnement du dispositif montré sur la fig. 4 est le même que celui du dispositif représenté sur la fig. 3. On précise cependant les points suivants:

La diode 107 et le condensateur 109 permettent de bloquer le transistor 100 en l'absence permanente d'impulsions 76. Si une telle absence d'impulsions provoquait la saturation permanente des transistors 100 et 103, les transistors 94 et 97 seraient bloqués, ce qui amènerait à diminuer la tension appliquée sur la cathode 64 et donc à augmenter l'intensité du courant cathodique. Le tube risquerait alors d'être détérioré.

Une telle situation ne peut se produire. En effet, en l'absence d'impulsions, le transistor 103 est bloqué du fait de la charge du condensateur 109.

Les impulsions 76 ont une polarité et une amplitude telles qu'elles permettent de bloquer le transistor 103. Ces impulsions sont engendrées pendant les balayages de retour de lignes, c'est-à-dire pendant les temps d'échantillonnage.

Pendant les balayages d'aller de ligne (entre deux impulsions 76), le transistor 103 est saturé et l'interrupteur 74 est donc fermé. Le transistor 100 est également saturé, son émetteur étant alors à la masse. L'intensité du courant de base de ce dernier transistor est fonction de la valeur de la résistance 102 dont dépend la valeur de la charge prise par le condensateur 101.

A l'apparition d'une impulsion 76 – pendant les balayages de retour de lignes, le potentiel de la base du transistor 100 n'est pas modifié et se maintient à la valeur imposée par la charge du condensateur 101 (accumulée lors des périodes de saturation du transistor 100) tandis que le potentiel de son émetteur prend une valeur de l'ordre de 1 volt déterminée par les valeurs de résistances 104 et 105a formant diviseur de tension. Dans ces conditions, ce transistor 100 est bloquée et l'interrupteur 74 est ainsi ouvert.

Le transistor 94 du dispositif à mémoire 70 permet d'amplifier encore le courant sortant de l'amplificateur 65 et de le transformer en tension et le mettre en mémoire dans le condensateur 96. Le transistor 97 et le condensateur 99 ont des fonctions analogues au, respectivement, transistor 94 et condensateur 96.

On appréciera que le dispositif représenté sur la fig. 4 est de réalisation simple, ne nécessitant qu'un nombre réduit de transistors sur lesquels une tension élevée est appliquée. En particulier, le transistor 100 des moyens interrupteurs est polarisé à une tension relativement faible. Ce circuit peut être réalisé sous forme intégrée dans sa plus grande partie.

En outre, son fonctionnement est satisfaisant étant donné que les capacités parasites, qui apparaissent lorsqu'on a affaire à des liaisons à haute impédance, sont réduites. Le dispositif selon l'invention peut être utilisé dans tous les types de dispositifs de visualisation à tubes à rayons cathodiques tels que les appareils récepteurs de télévision. Toutefois, il est particulièrement utile pour la réalisation de récepteurs de télévision en couleurs, notamment ceux dans lesquels les grilles dites «$G_1$» sont toutes portées au même potentiel.

Il présente en outre les avantages suivants: le vieillissement des tubes et les dispersions (inévitables) des paramètres de construction des tubes et des canons, sont automatiquement corrigés ou compensés. Dans le cas de l'application aux appareils récepteurs de télévision en couleurs, les couleurs sont stabilisées de façon immédiate à la mise en route de l'appareil. Enfin, il n'est pas nécessaire de régler les tensions de blocage en usine.

**Revendications de brevet**

1. Dispositif générateur de la tension de blocage d'un tube à rayons cathodiques, notamment pour la visualisation, telle que la télévision en couleurs, comportant des moyens sensibles à l'intensité du courant cathodique pendant des temps d'échantillonnage au cours desquels le signal vidéo est nul et des moyens régulateurs pour modifier la tension de blocage en fonction de cette intensité, de façon à annuler celle-ci quand le signal vidéo est nul, caractérisé en ce que les signaux de tension vidéo et de blocage étant appliqués sur la cathode (5, 64) du (ou des) canon(s) à électron du tube par l'intermédiaire d'un amplificateur de tension vidéo (1) (60), ledit dispositif comporte une boucle de contre-réaction (15, 21) (65, 70) insérée entre la connexion reliant la sortie (3) (62) dudit amplificateur de tension vidéo à la cathode (5) (64) correspondante et une entrée de régulation (4) (63) dudit amplificateur de tension vidéo, pour l'asservissement de la tension de blocage et en ce que cette boucle de contre-réaction comprend un amplificateur de courant (15) (65) pour amplifier le courant cathodique présentant une impédance de sortie de valeur élevée par rapport à l'impédance de sortie de l'amplificateur de tension vidéo, le circuit d'entrée (16, 17) (66, 67) dudit amplificateur de courant étant relié à ladite connexion, et des moyens de mise en mémoire (21, 70) dont l'entrée est connectée à la sortie dudit amplificateur de courant (15) (65) et dont la sortie est reliée à ladite entrée de régulation (4) (63).

2. Dispositif selon la revendication 1, caractérisé en ce qu'il est prévu des moyens interrupteurs commandés (6) (74) reliés audit amplificateur de courant pour inhiber le fonctionnement de ladite boucle de contre-réaction en amont dudit moyen de mise en mémoire.

3. Dispositif selon la revendication 2, caractérisé en ce que les moyens interrupteurs (6) sont agencés pour court-circuiter l'entrée de l'amplificateur de courant en dehors des temps d'échantillonnage.

4. Dispositif selon la revendication 3, caractérisé en ce qu'il comprend, pour commander les moyens interrupteurs (6) des moyens générateurs d'impulsions de courant (12, 10) pendant les temps d'échantillonnage ou les temps complémentaires, ces moyens générateurs présentant une impédance de sortie de valeur élevée par rapport à l'impédance de sortie de l'amplificateur vidéo, et en ce que le dispositif est monté de façon telle que les impulsions de courant circulent dans un circuit (7, 6, 8, 3) dans lequel est disposée la sortie de l'amplificateur vidéo.

5. Dispositif selon la revendication 4, caractérisé en ce qu'il comprend des moyens pour engendrer un signal de commande de l'ouverture des moyens interrupteurs en cas de fonctionnement anormal des moyens générateurs d'impulsions de courant, telle qu'une absence permanente de telles impulsions.

6. Dispositif selon la revendication 4 ou la revendication 5, caractérisé en ce que les moyens générateurs d'impulsions de courant comportent un convertisseur d'impulsions (10) de tension, engendrées pendant les temps d'échantillonnage ou les temps complémentaires, en impulsions de courant.

7. Dispositif selon l'une quelconque des revendications précédentes, caractérisé en ce que l'amplificateur vidéo est du type à charge active.

8. Dispositif selon la revendication 2, caractérisé en ce que lesdits moyens interrupteurs (74) sont connectés pour court-circuiter les moyens de mise en mémoire en dehors des temps d'échantillonnage.

9. Dispositif selon la revendication 8, caractérisé en ce que lesdits moyens interrupteurs sont connectés en dérivation entre une connexion reliant la sortie (69) dudit amplificateur auxdits moyens de mise en mémoire (70) et un point de potentiel constant, notamment la masse.

10. Appareil récepteur de télévision en couleurs, comportant trois canons à électrons, caractérisé en ce qu'il comprend un dispositif selon la revendication 8 ou 9, pour chacun de ces canons et, pour commander les moyens interrupteurs, des moyens communs (76) aux trois dispositifs pour engendrer des impulsions de tension pendant les temps d'échantillonnage ou les temps complémentaires.

11. Appareil selon la revendication 10, caractérisé en ce qu'il comprend, en commun aux trois dispositifs, des moyens (107, 109) pour engendrer un signal de commande de l'ouverture des moyens interrupteurs en cas de fonctionnement anormal des moyens générateurs d'impulsions de tension, comme dans le cas d'une absence permanente de telles impulsions.

12. Appareil récepteur de télévision, caractérisé en ce qu'il comporte un dispositif selon l'une quelconque des revendications précédentes.

13. Appareil récepteur de télévision en couleurs comportant trois canons à électrons, caractérisé en ce qu'il comprend un dispositif selon l'une quelconque des revendications 1 à 7 pour chacun de ces canons.

14. Appareil de visualisation à tubes à rayons cathodiques, caractérisé en ce qu'il comporte un dispositif selon l'une quelconque des revendications 1 à 7.

**Patentansprüche**

1. Vorrichtung zum Erzeugen einer Sperrspannung einer Kathodenstrahlröhre, insbesondere für die Sichtbarmachung, wie z.B. für das Farbfernsehen, mit Einrichtungen, welche auf die Intensität des Kathodenstromes während Probezeiten empfindlich sind, in deren Verlauf das Videosignal Null ist und mit Steuereinrichtungen zum Modifizieren der Sperrspannung in Abhängigkeit von dieser Intensität zum Annulieren derselben, wenn das Videosignal Null ist, dadurch gekennzeichnet, dass die Signale der Videospannung und der Sperrspannung auf die Kathode (5, 64) der Elektronenkanone (n) der Röhre mittels eines Videospannungsverstärkers (1, 60) aufgebracht werden, dass die Vorrichtung eine Rückkopplungsschleife (15, 21; 65, 70) aufweist, welche in diejenige Verbindung eingefügt ist, welche den Ausgang (3; 62) des Videospannungsverstärkers mit der entsprechenden Kathode (5; 64) verbindet, und einen Steuereingang (4; 63) des Video-

spannungsverstärkers zur Steuerung der Sperr-spannung aufweist, dass diese Rückkopplungs-schleife einen Stromverstärker (15; 65) zur Verstärkung des Kathodenstromes aufweist und eine Ausgangsimpedanz mit grösserem Wert als die Ausgangsimpedanz des Videospannungsverstärkers hat, dass der Eingangsschaltkreis (16, 17; 66, 67) des Stromverstärkers an diese Verbindung angeschlossen ist, und dass eine Speichereinrichtung (21, 70) vorgesehen ist, deren Eingang mit dem Ausgang des Stromverstärkers (15; 65) verbunden ist, und deren Ausgang mit dem Eingang der Steuerung (4; 63) verbunden ist.

2. Vorrichtung nach Anspruch 1, dadurch ge-kennzeichnet, dass gesteuerte Unterbrechungs-einrichtungen (6; 74) zur Hinderung des Betriebes der Rückkopplungsschleife aufstromig von der Speichereinrichtung mit dem Stromverstärker verbunden sind.

3. Vorrichtung nach Anspruch 2, daduch ge-kennzeichnet, dass die Unterbrechungseinrich-tungen (6) zum Kurzschliessen des Eingangs des Stromverstärkers ausserhalb der Probezeiten angeordnet sind.

4. Vorrichtung nach Anspruch 3, dadurch gekennzeichnet, dass zur Steuerung der Unter-brechereinrichtungen (6) Stromimpulsgenerato-ren (12, 10) während der Probezeiten oder der komplementären Zeiten vorgesehen sind, diese Erzeugereinrichtungen eine Ausgangsimpedanz mit grösserem Wert als die Ausgangsimpedanz des Videoverstärkers haben und dass die Vorrichtung so angeordnet ist, dass die Stromimpulse in einer Schaltung (7, 6, 8, 3) umlaufen, in welcher der Ausgang des Videoverstärkers angeordnet ist.

5. Vorrichtung nach Anspruch 4, gekennzeichnet durch Einrichtungen zum Erzeugen eines Steuersignals für das Öffnen der Unterbrechereinrichtungen bei einem anormalen Betrieb der Stromimpulserzeugereinrichtungen, wie z.B. dem dauernden Fehlen dieser Impulse.

6. Vorrichtung nach Anspruch 4 oder 5, da-durch gekennzeichnet, dass die Stromimpulser-zeugereinrichtungen einen Spannungsimpuls-wandler bzw. Impulsumformer aufweisen, wobei die Impulse während der Probezeiten oder der komplementären Zeiten als Stromimpulse erzeugt werden.

7. Vorrichtung nach einem der Ansprüche 1 bis 6, dadurch gekennzeichnet, dass der Videoverstärker ein Wirklastverstärker ist.

8. Vorrichtung nach Anspruch 2, dadurch ge-kennzeichnet, dass die Unterbrechereinrichtun-gen (74) zum Kurzschliessen der Speichereinrichtungen ausserhalb der Prüfzeiten angeschlossen sind.

9. Vorrichtung nach Anspruch 8, dadurch ge-kennzeichnet, dass die Unterbrechereinrichtun-gen (74) als Zweigleitung zwischen einer Verbindung, welche den Ausgang (69) des Verstärkers mit den Speichereinrichtungen (70) verbindet, und einer Stelle mit konstantem Potential, insbesondere Erde, angeschlossen sind.

10. Vorrichtung nach einem der Ansprüche 1 bis 9, dadurch gekennzeichnet, dass sie in einem Farbfernsehapparat mit drei Elektronenkanonen angeordnet ist, und zwar für jeweils eine der Kanonen, und dass den drei Vorrichtungen zum Steuern der Unterbrechereinrichtungen gemeinsame Einrichtungen (76) zugeordnet sind zum Erzeugen von Spannungsimpulsen während der Probezeiten oder der komplementären Zeiten.

11. Vorrichtung nach Anspruch 10, dadurch gekennzeichnet, dass in dem Fernsehapparat den drei Vorrichtungen Einrichtungen (107, 109) gemeinsam sind zum Erzeugen eines Steuersignals zum Öffnen der Unterbrechereinrichtungen bei anormalem Betrieb der Spannungsimpulserzeugungseinrichtungen, wie z.B. beim dauernden Fehlen dieser Impulse.

12. Fernsehapparat, dadurch gekennzeichnet, dass er eine Vorrichtung nach irgendeinem der vorhergehenden Ansprüche aufweist.

13. Farbfernsehapparat, drei Elektronenkanonen aufweisend, dadurch gekennzeichnet, dass er für jede dieser Kanonen eine Vorrichtung nach irgendeinem der Ansprüche 1 bis 7 aufweist.

14. Apparat mit Kathodenstrahlröhren für die Sichtbarmachung, dadurch gekennzeichnet, dass er eine Vorrichtung nach irgendeinem der Ansprüche 1 bis 7 aufweist.

**Patent claims**

1. A device for generating a cutoff voltage for a cathode ray tube, particularly for display purposes such as colour television, comprising means which are sensitive to the intensity of the cathode current during sampling times during which the video signal is zero and regulating means for modifying the cutoff voltage as a function of this intensity, in such a manner that the latter is cancelled when the video signal is zero, characterised in that, whilst the video and cutoff voltage signals are applied to the cathode (5, 64) of the electron gun(s) of the tube via a video voltage amplifier (1) (60), the said device comprises a feedback loop (15, 21) (65, 70) which is inserted between the connection linking the output (3) (62) of the said video voltage amplifier to the corresponding cathode (5) (64) and a control input (4) (63) of the said video voltage amplifier, in order to control the cutoff voltage, and in that this feedback loop comprises a current amplifier (15) (65) for amplifying the cathode current which presents an output impedance the value of which is higher than the output impedance of the video voltage amplifier, the input circuit (16, 17) (66, 67) of the said current amplifier being linked to the said connection, and of storage means (21, 70) the input of which is connected to the output of the said current amplifier (15, 65) and the output of which is linked to the said control input (4) (63).

2. A device according to Claim 1, characterised in that it is provided with controlled switching means (6) (74) linked to the said current amplifier for inhibiting the operation of the said feedback loop upstream from the said storage means.

3. A device according to Claim 2, characterised in that the switching means (6) are arranged for short-circuiting the current amplifier input outside the sampling times.

4. A device according to Claim 3, characterised in that it comprises, for the purpose of controlling the switching means (6), means for generating current pulses (12, 10) during the sampling periods of complementary periods, these generating means presenting an output impedance the value of which is higher than the output impedance of the video amplifier, and in that the device is mounted in such a manner that the current pulses circulate in a circuit (7, 6, 8, 3) in which the output of the video amplifier is arranged.

5. A device according to Claim 4, characterised in that it comprises means for generating a control signal for opening the switching means in case of a malfunction of the means for generating current pulses such as a permanent absence of these pulses.

6. A device according to Claim 4 or Claim 5, characterised in that the means for generating current pulses comprise a converter (10) for converting voltage pulses generated during the sampling periods or the complementary periods into current pulses.

7. A device according to any one of the preceding claims, characterised in that the video amplifier is of the active load type.

8. A device according to Claim 2, characterised in that the said switching means (74) are connected in such a manner that the storage means are short-circuited outside the sampling periods.

9. A device according to Claim 8, characterised in that the said switching means are shunt connected between a connection linking the output (69) of the said amplifier to the said storage means (70) and a constant voltage point, particularly earth.

10. A colour television receiver comprising three electron guns, characterised in that it comprises a device according to Claim 8 or 9 for each of these guns and, for the purpose of controlling the switching means, means (76) which are common to the three devices for generating voltage pulses during the sampling periods or complementary periods.

11. An apparatus according to Claim 10, characterised in that it comprises means (107, 109), common to the three devices, for generating a control signal for opening the switching means in case of a malfunction of the means of generating the voltage pulses as in the case of a permanent absence of such pulses.

12. A television receiver, characterised in that it comprises a device according to any one of the preceding claims.

13. A colour television receiver comprising three electron guns, characterised in that it comprises a device according to any one of Claims 1 to 7 for each of these guns.

14. A cathode ray tube display device, characterised in that it comprises a device according to any one of Claims 1 to 7.

Fig. 1

Fig. 3

Fig. 2

Fig. 4